# EUROPEAN PATENT SPECIFICATION

(11) **EP 2 448 091 B1**
(45) Date of publication and mention of the grant of the patent: **03.04.2019**
(21) Application number: 10791826.0
(22) Date of filing: 21.06.2010
(51) Int. Cl.: H02K 3/50, H02K 3/52

(54) **STATOR FOR ELECTRIC MOTOR, ELECTRIC MOTOR, AND ELECTRIC BICYCLE**
STATOR FÜR EINEN ELEKTROMOTOR, ELEKTROMOTOR UND ELEKTROFAHRRAD
STATOR POUR MOTEUR ÉLECTRIQUE, MOTEUR ÉLECTRIQUE ET BICYCLETTE ÉLECTRIQUE

(30) Priority: 24.06.2009 JP 2009149240
(43) Date of publication of application: 02.05.2012
(73) Proprietor: Panasonic Corporation, Kadoma-shi Osaka 571-8501 (JP)
(72) Inventor: UMEGAKI, Fuhito, Osaka 540-6207 (JP); UNO, Tadashi, Osaka 540-6207 (JP); MIYOSHI, Hiroyuki, Osaka 540-6207 (JP)
(74) Representative: Grünecker Patent- und Rechtsanwälte PartG mbB
(86) International application number: PCT/JP2010/004109
(87) International publication number: WO 2010/150503

(56) References cited:
- JP-A- 2001 071 983
- JP-A- 2001 103 700
- JP-A- 2006 340 580
- US-A- 5 001 379
- US-A1- 2009 127 964
- US-A1- 2009 127 971

## Description

### Technical Field

The present invention relates to a stator of an electric motor in which an enclosure is formed with resin, an electric motor with the stator, and an electric bicycle with the electric motor.

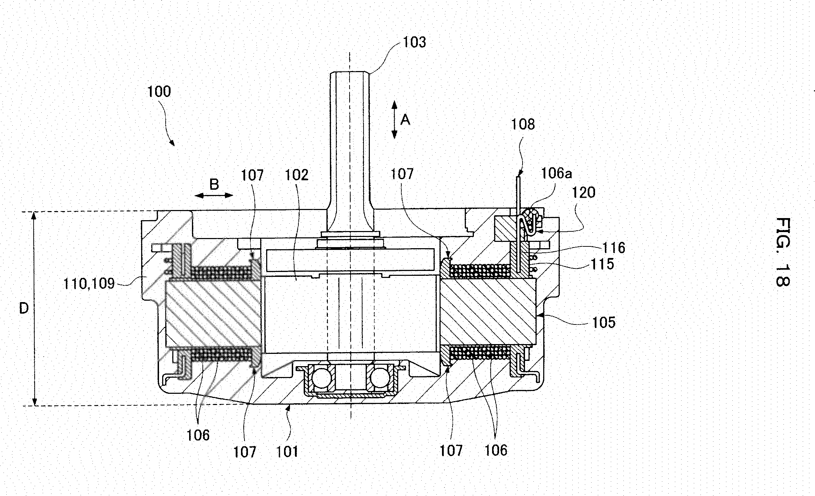

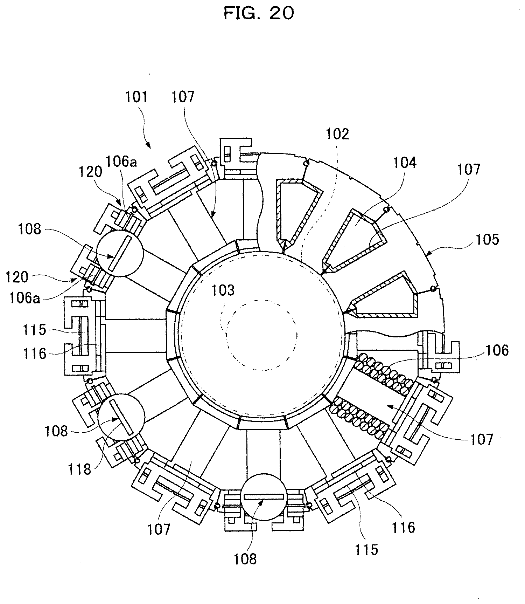

A generic stator having the features defined in the preamble of claim 1 is for instance shown in Figs. 18 to 20.

### Background Art

Existing examples of the electric motor include, as shown in FIGS. 18 to 20 , a brushless electric motor 100 including a stator 101, a rotor 102, and a rotation axis 103 which integrally rotates with the rotor 102. The stator 101 includes a stator core 105 having slots 104, coils 106 wound around the stator core 105, insulators 107 providing insulation between the stator core 105 and the coils 106, and terminals 108. The stator core 105, the coils 106, and the insulators 107 are integrally molded with a resin portion 109, and an enclosure 110 is formed with the resin portion 109.

As shown in FIG. 18 , the insulator 107 has a terminal holding portion 115 provided on the outer end portion of the stator core 105 in a diameter direction B and protruding toward one side of the insulator 107 along an axial direction A of a rotating shaft 103. An insertion hole 116 for mounting the terminal 108 is formed in the terminal holding portion 115. The terminal 108 is inserted into the insertion hole 116 to be mounted on the terminal holding portion 115.

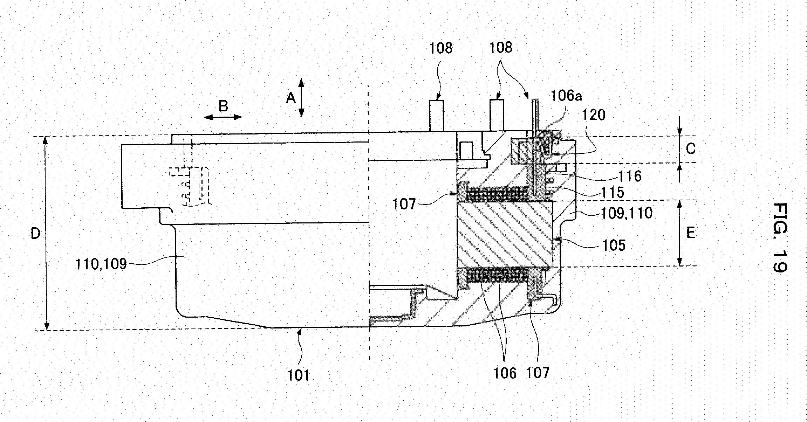

As shown in FIG. 19 , the terminal 108 has a coil connecting portion 120 embedded in the resin portion 109 and connected to the coils 106. A terminal division 106a of the coils 106 is connected to the coil connecting portion 120 of the terminal 108 by solder.

For example, Patent Literature 1 discloses a stator in which a stator core is constituted by connecting a plurality of division cores.

A further stator, comprising the features of the preamble of claim 1, having a stator core and a rotor is described in US 2009/127971 A1. Further stators are disclosed in US 2009/127964 A1 and US 5 001 379 A.

Further, Patent Literature 2 discloses a stator having a structure in which a terminal is made to protrude directly from an enclosure integrally formed with a resin portion.

### Citation List

### Patent Literatures

Patent Literature 1: Japanese Patent Application Laid-Open Publication No. 10-155248
Patent Literature 2: Japanese Patent Application Laid-Open Publication No. 2004-40866

### Summary of Invention

### Technical Problem

However, in the above configuration, as shown in FIG. 19 , it is difficult to reduce a dimension C from the leading end surface of the terminal holding portion 115 of the insulator 107 to the coil connecting portion 120 in the axial direction A. Accordingly, a dimension D from one end surface to another end surface of the enclosure
110 of the stator 101 increases in the axial direction A. This causes the electric motor 100 to increase in size in the axial direction A.

Especially in the case where the above-described electric motor 100 is used as the auxiliary power source of an electric bicycle, a space is limited for mounting the electric motor 100. A thickness E of the stator core 105 may be reduced to control the dimension D of the enclosure 110 of the stator 101, but in this case, the output of the electric motor 100 may be disadvantageously reduced.

An object of the present invention is to provide a stator of an electric motor and an electric motor which can be reduced in size without a reduction in the output of the electric motor, and an electric bicycle with the electric motor.

### Solution to Problem

In order to solve the aforementioned problem, a stator having the features defined in claim 1 is provided.

In this configuration, the body portion of the terminal is extended in the diameter direction of the stator core, and the connecting piece and the folded piece constituting the coil connecting portion are formed along the diameter direction of the stator core to sandwich the coils from the axial direction. Thus, a dimension from the leading end surface of the terminal holding portion of the insulator to the coil connecting portion is reduced in the axial direction. This makes it possible to reduce a dimension from one end surface to another end surface of the enclosure of the stator in the axial direction without a reduction in the thickness of the stator core, resulting in a size reduction of the electric motor in the axial direction without a reduction in the output of the electric motor.

The stator of an electric motor according to the second aspect of the present invention, being characterized in that: the stator core, the coils, and the insulator are integrally molded with a resin portion, and the enclosure is integrally formed with the resin portion; the external connecting portion of the terminal protrudes to the outside from the end surface of the resin portion in the axial direction; and the mounted
portion, the body portion, and the coil connecting portion of the terminal are embedded in the resin portion.

The stator of an electric motor according to the third aspect of the present invention, being characterized in that the body portion of the terminal faces the coils with a gap therebetween in the axial direction, and a protective member is provided on the terminal to provide insulation between the body portion of the terminal and the coils.

Thus, the protective member reliably provides insulation between the coils wound around the stator core and the body portion of the terminal.

The stator of an electric motor according to the fourth aspect of the present invention, being characterized in that: the mounted portion of the terminal is provided on one end portion of the body portion of the terminal in the diameter direction of the stator core; the one end portion of the body portion of the terminal is held by the terminal holding portion of the insulator via the mounted portion of the terminal; and another end portion of the body portion of the terminal is supported by the insulator via a cap provided on the terminal.

In this configuration, since the one end portion and the other end portion of the body portion of the terminal are supported by the insulator, even if the pressure of resin injected into a mold generates force acting on the body portion of the terminal in the axial direction in resin molding, the deformation of the body portion of the terminal can be suppressed.

The stator of an electric motor according to the fifth aspect of the present invention, being characterized in that the coil connecting portion and the coils are pressure-welded, and spaces are formed on the outer sides of the connecting piece and the folded piece in the axial direction, the spaces allowing electrodes for pressure welding to be placed therein.

In this configuration, the electrodes are placed on the outer sides of the connecting piece and the folded piece with the coils sandwiched terebetween, and pressure welding is performed. Thus, a gap between the connecting piece and the folded piece is closed to pressure-weld the coils between the connecting piece and the folded piece. Since the spaces allowing the electrodes for pressure welding to be placed therein are formed on the outer sides of the connecting piece and the folded piece in the axial direction, the coils can be easily and reliably connected to the coil connecting portion.

An electric motor according to the present invention comprising: the stator according to any one of the first to fifth aspects; a rotor; and a rotation axis rotated by the rotor.

This makes it possible to reduce the size of the electric motor in the axial direction of the rotation axis without a reduction in the output of the electric motor.

An electric bicycle according to the present invention comprising: the electric motor according to the present invention, the electric bicycle being characterized in that the rotary driving force of the electric motor is used as auxiliary power.

This makes it possible to reduce the size of the electric motor in the axial direction without a reduction in the output of the electric motor. Thus, it is most suitable for an electric bicycle having a limited space for mounting.

### Advantageous Effects of Invention

As described above, the present invention is most suitable for an electric bicycle having a limited space for mounting an electric motor, since the stator can be reduced in size without a reduction in the output of the electric motor, resulting in a size reduction of the electric motor.

### Brief Description of Drawings

FIG. 1 is a side view showing an electric bicycle with an electric motor according to a first embodiment of the present invention.
FIG. 2 is a cross-sectional view showing the electric motor according to the first embodiment.
FIG. 3 shows the stator of the electric motor viewed from the axial direction of the stator according to the first embodiment.
FIG. 4 is a cross-sectional side view partly showing the stator of the electric motor according to the first embodiment.
FIG. 5 is an exploded view showing a division core and an insulator of the stator of the electric motor according to the first embodiment.
FIG. 6 is a view taken along arrows X - X in FIG. 3.
FIG. 7 is a partly enlarged view of FIG. 6.
FIG. 8 is a view taken along arrows Y - Y in FIG. 3.

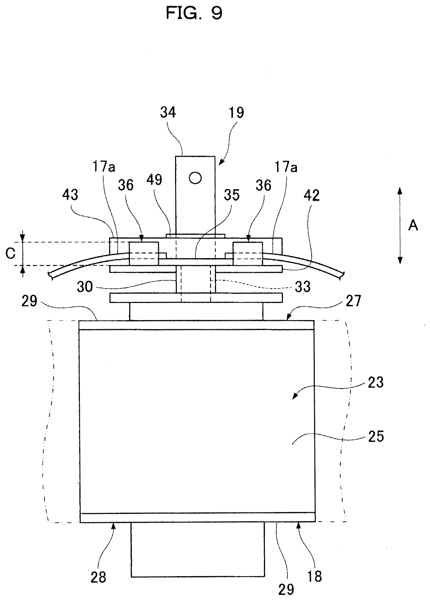

FIG. 9 is a view taken along arrows Z - Z in FIG. 3.
FIG. 10 is a perspective view showing a terminal provided on the stator of the electric motor according to the first embodiment.
FIG. 11 shows the cap of the stator of the electric motor according to the first embodiment.
FIG. 12 shows the protective member of the stator of the electric motor according to the first embodiment.
FIG. 13 shows the terminal viewed from the side of the cap in a state in which the cap and the protective member are mounted on the terminal of the stator of the electric motor according to the first embodiment.
FIG. 14 shows the terminal viewed from the side of the protective member in the state in which the cap and the protective member are mounted on the terminal of the stator of the electric motor according to the first embodiment.
FIG. 15 is a cross-sectional view showing a method for forming the resin portion of the stator of the electric motor with a mold according to the first embodiment.
FIG. 16 is a cross-sectional side view partly showing the stator of an electric motor according to a second embodiment of the present invention.
FIG. 17 is a cross-sectional side view partly showing the stator of an electric motor according to a third embodiment of the present invention.
FIG. 18 is a cross-sectional view showing an electric motor according to the related art.
FIG. 19 is a cross-sectional side view partly showing the stator of the electric motor according to the related art.
FIG. 20 shows the stator of the electric motor of the related art viewed from the axial direction.

### Description of Embodiments

Referring to the accompanying drawings, the following will describe embodiments of the present invention.

### (First Embodiment)

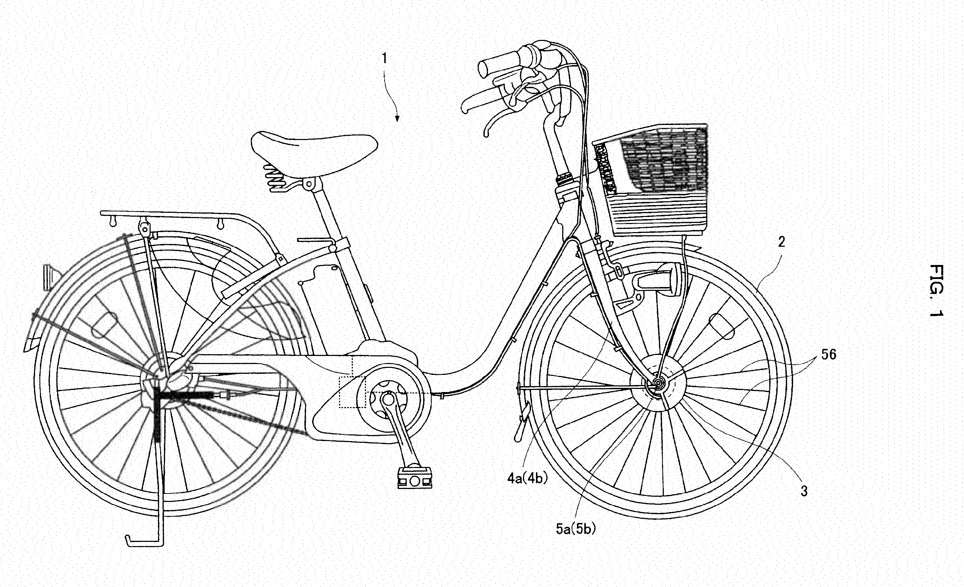

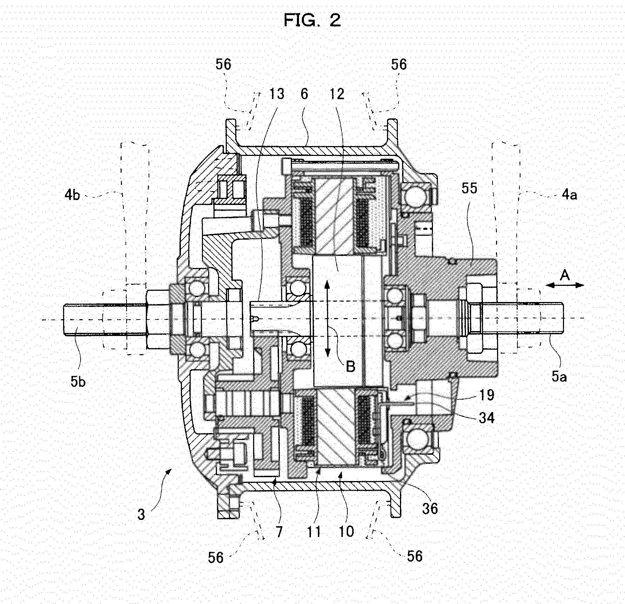

In the first embodiment, as shown in FIG. 1, reference numeral 1 denotes an electric bicycle using the rotary driving force of an electric motor 10 as auxiliary power. The electric motor 10 is incorporated into an electric hub device 3 of a front wheel 2 to add the auxiliary power to the front wheel 2. As shown in FIG. 2, the electric hub device 3 includes a pair of left and right hub spindles 5a and 5b attached to a pair of left and right front forks 4a and 4b, a hub shell 6 rotatable about the hub spindles 5a and 5b, the electric motor 10 for rotating the hub shell 6, and a speed reducer 7 for reducing the output rotational speed of the electric motor 10 to transmit the reduced speed to the hub shell 6.

The electric motor 10 is mounted on a fixed member 55, and the fixed member 55 is provided on the one hub spindle 5a. Further, the hub shell 6 is rotatably supported by the other hub spindle 5b. Spokes 56 of the front wheel 2 are connected to the hub shell 6.

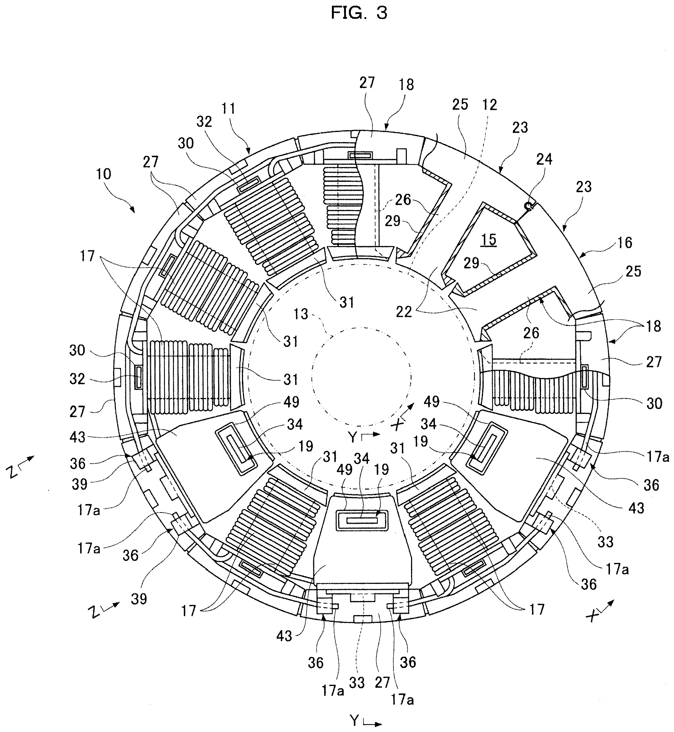

As shown in FIGS. 2 and 3, the electric motor 10 is a brushless motor including a stator 11, a rotor 12, and a rotation axis 13 which rotates integrally with the rotor 12.

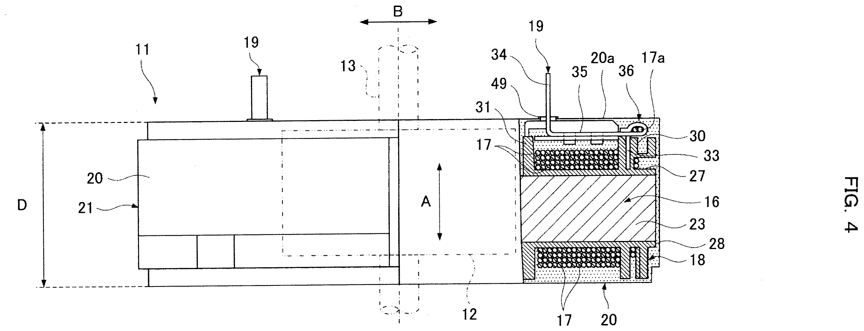

As shown in FIGS. 3 and 4, the stator 11 includes a stator core 16 (iron core) having a slot 15, coils 17 wound around the stator core 16, a resin insulator 18 providing insulation between the stator core 16 and the coils 17, and a plurality of terminals 19. The stator core 16, the coils 17, and the insulator 18 are integrally molded with a resin portion 20, and an enclosure 21 is formed with the resin portion 20. Thus, the stator core 16 with the insulator 18 attached thereto and the coils 17 wound therearound is contained in the enclosure 21. Further, an axial direction A of the rotation axis 13 is orthogonal to a diameter direction B of the stator core 16.

The stator core 16 is divided into division cores 23 for respective teeth 22 serving as a magnetic pole, and the adjoining division cores 23 are annularly connected to each other via connecting portions 24. The division cores 23 each include an arc-shaped yoke 25 placed on the outer peripheral side of the stator core 16 and the tooth 22 formed from the inner side of the yoke 25 toward the center portion of the stator core 16. A coil portion 26 is formed on the tooth 22. Further, the division core 23 is composed of a plurality of laminated core sheets made of magnetic steel.

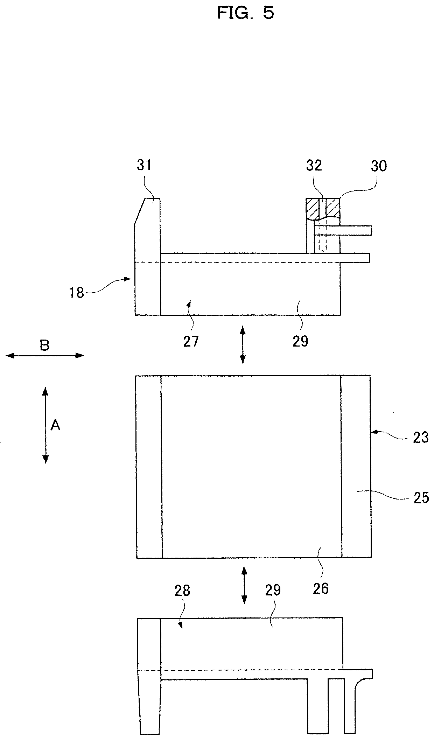

As shown in FIG. 5, the insulator 18 is divided for the division cores 23 and is further divided into one division insulator 27 and another division insulator 28 in the axial direction A. The one division insulator 27 is fitted onto the division core 23 from one side in the axial direction A, and the other division insulator 28 is fitted onto the division core 23 from another side in the axial direction A.

The insulator 18 includes a laminate portion 29 covering the surface of the division core 23, a terminal holding portion 30 formed on the laminate portion 29, and a protruding portion 31. The terminal holding portion 30 is located in the outer end portion of the one division insulator 27 so as to protrude toward the one side in the axial direction A. Further, the protruding portion 31 is located in the inner end portion of the one division insulator 27 so as to protrude toward the one side in the axial direction A and face the terminal holding portion 30 in the diameter direction B of the stator core 16. Moreover, an insertion hole 32 is formed in the terminal holding portion 30.

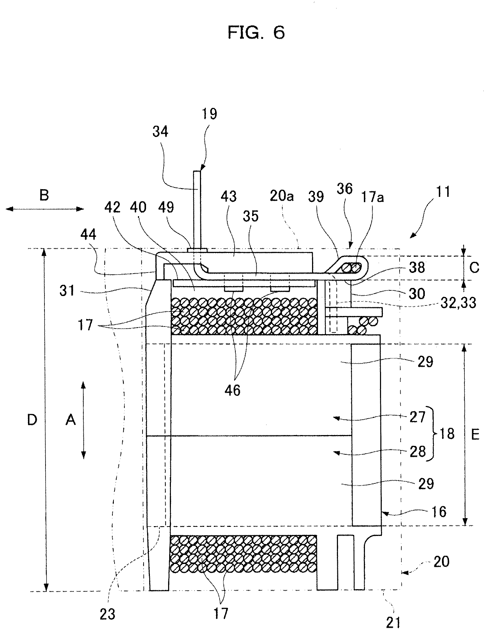

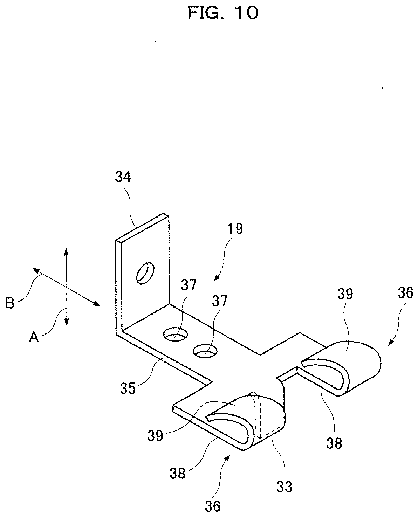

As shown in FIG. 6, the coils 17 are wound around the coil portion 26 of the division core 23 from the outer side of the laminate portion 29 of the insulator 18, between the terminal holding portion 30 and the protruding portion 31. As shown in FIG. 10, the terminal 19 includes a mounted portion 33 embedded into the resin portion 20 and mounted on the terminal holding portion 30 of the insulator 18, an external connecting portion 34 protruding to the outside in the axial direction A from one end surface 20a of the resin portion 20 in the axial direction A, a body portion 35 extended along the diameter direction B between the mounted portion 33 and the external connecting portion 34, and coil connecting portions 36 embedded into the resin portion 20 and connected to terminal end portions 17a of the coils 17.

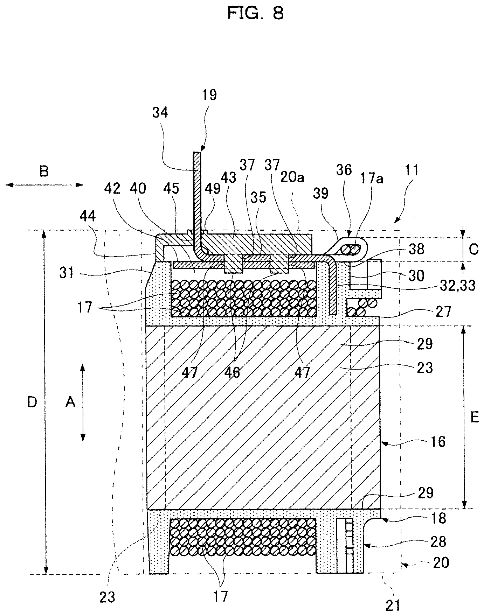

The body portion 35 is embedded into the resin portion 20 parallel to the diameter direction B of the stator core 16. A plurality of mounting holes 37 are formed in the body portion 35 to pass through two sides of the body portion 35. The mounted portion 33 is provided on the outer end portion (one end portion) of the body portion 35 in the diameter direction B, and the external connecting portion 34 is provided on the inner end portion (another end portion) of the body portion 35 in the diameter direction B. The mounted portion 33 and the external connecting portion 34 are orthogonal to the body portion 35 and are opposed to each other in the axial direction A. As shown in FIG. 8, the mounted portion 33 is inserted into the insertion hole 32 of the terminal holding portion 30 of the one division insulator 27, so that the terminal 19 is mounted on the division insulator 27.

As shown in FIGS. 8 and 10, the coil connecting portions 36 include connecting pieces 38 provided in a linked manner laterally from the body portion 35 and extended along the diameter direction B, and folded pieces 39 folded back in the diameter direction B from the end portions of the connecting pieces 38 to sandwich the terminal end portions 17a of the coils 17 in the axial direction A. Further, the terminal end portions 17a of the coils 17 are interposed between the connecting pieces 38 and the folded pieces 39 and are pressure-welded to the coil connecting portions 36.

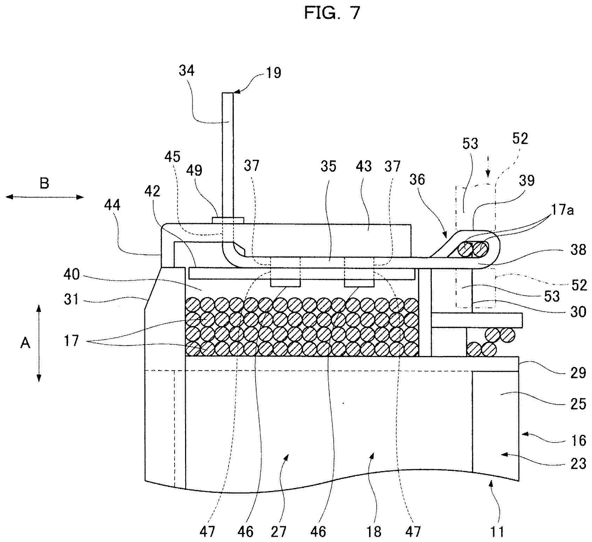

As shown in FIG. 7, before the resin portion 20 is molded, spaces 53 are formed on the outer sides of the connecting pieces 38 and folded pieces 39 in the axial direction A. Electrodes 52 for pressure welding can be placed in the spaces 53.

As shown in FIG. 6, the body portion 35 of the terminal 19 faces the coils 17 with a gap 40 therebetween in the axial direction A. Further, a resin protective member 42 providing insulation between the body portion 35 and the coils 17 and a resin cap 43 are provided on the terminal 19.

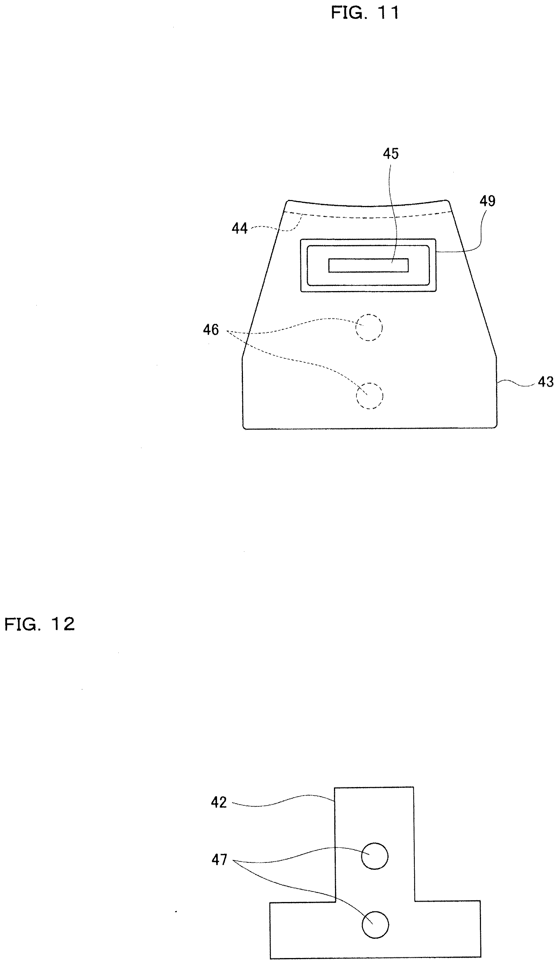

As shown in FIGS. 7, 8, and 11, the cap 43 has a supporting piece 44 on the inner end portion thereof in the diameter direction B. The cap 43 further has an insertion hole 45 passing through two sides thereof and a plurality of protrusions 46 protruding in the axial direction A from the rear side. Moreover, as shown in FIG. 12, the protective member 42 has a plurality of fit-in holes 47 passing through two sides thereof.

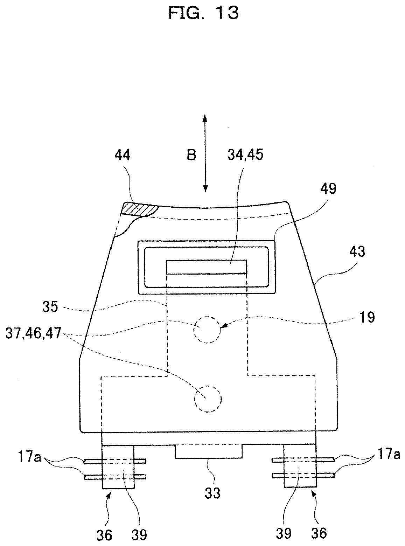

As shown in FIGS. 7, 8, 11, and 13, the external connecting portion 34 is inserted through the insertion hole 45 from the rear side of the cap 43, the cap 43 is placed on the front side of the body portion 35 of the terminal 19, the protective member 42 is placed on the rear side of the body portion 35, and the protrusions 46 of the cap 43 are fitted in the mounting holes 37 of the body portion 35 and the fit-in holes 47 of the protective member 42, so that the protective member 42 and the cap 43 are mounted on the terminal 19.

In this case, the supporting piece 44 of the cap 43 abuts against the protruding portion 31 of the one division insulator 27 from the axial direction A. Thus, the outer end portion of the body portion 35 of the terminal 19 is held by the terminal holding portion 30 of the one division insulator 27 via the mounted portion 33, and the inner end portion of the body portion 35 is supported by the protruding portion 31 of the one division insulator 27 via the supporting piece 44 of the cap 43.

As shown in FIG. 11, a square frame-like resin leakage preventing ingate 49 (an example of a sealing portion) is provided on the front surface of the cap 43 so as to surround the insertion hole 45. Further, as shown in FIG. 4, the front end portion of the resin leakage preventing ingate 49 is exposed from the one end surface 20a of the resin portion 20 in the axial direction A.

The following will describe operations of the above configuration.

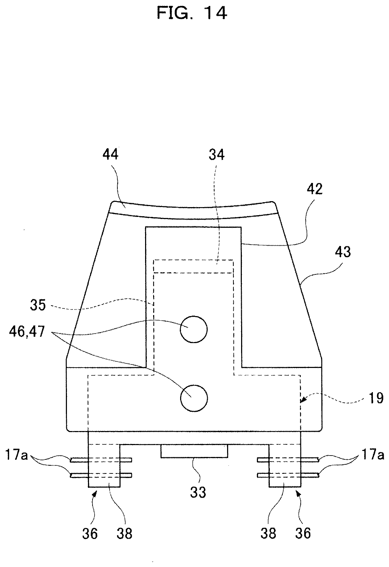

In manufacturing the electric motor 10, in a state in which the resin portion 20 is not formed in the stator 11, as shown in FIGS. 7, 8, 13, and 14, the external connecting portion 34 of the terminal 19 is inserted through the insertion hole 45 of the cap 43, and the protrusions 46 of the cap 43 are fitted in the mounting holes 37 of the body portion 35 of the terminal 19 and the fit-in holes 47 of the protective member 42, so that the protective member 42 and the cap 43 are mounted on the terminal 19.

Thereafter, the mounted portion 33 of the terminal 19 is inserted into the insertion hole 32 of the terminal holding portion 30 of the one division insulator 27 to be mounted on the one division insulator 27.

Next, as shown in FIG. 7, the terminal end portions 17a of the coils 17 are held between the connecting pieces 38 and the folded pieces 39, and the electrodes 52 for pressure welding are placed in the spaces 53, so that gaps between the connecting pieces 38 and the folded pieces 39 are closed in the axial direction A, and the terminal end portions 17a of the coils 17 are held and welded between the connecting pieces 38 and the folded pieces 39. Thus, since the spaces 53 are formed in which the electrodes 52 for pressure welding can be placed, the terminal end portions 17a of the coils 17 can be easily and reliably pressure-welded to the coil connecting portions 36.

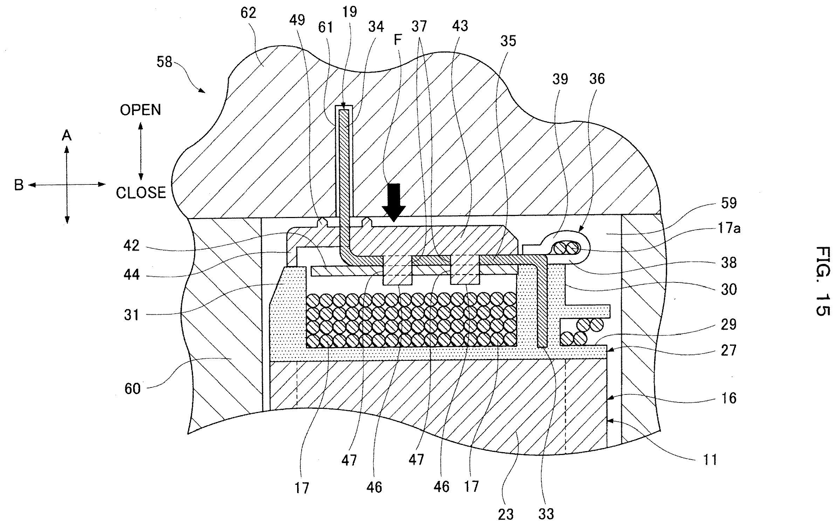

Thereafter, as shown in FIG. 15, in the resin molding step, a mold 58 is used to form the resin portion 20. The mold 58 includes a fixed mold 60 (lower mold) having a cavity 59 and a movable mold 62 (upper mold) having a hole portion 61.

In the resin molding step, the stator 11 is set in the cavity 59 of the fixed mold 60, and the movable mold 62 is lowered for mold clamping. In this case, the external connecting portion 34 of the terminal 19 is inserted into the hole portion 61 of the movable mold 62, and the resin leakage preventing ingate 49 of the cap 43 is pressed to the end surface of the movable mold 62 while surrounding the external connecting portion 34.

In this state, molten resin is injected into the cavity 59 of the fixed mold 60. At this point, since the resin leakage preventing ingate 49 is pressed to the end surface of the movable mold 62, a portion between the outer and inner sides of the resin leakage preventing ingate 49 is sealed to prevent the molten resin in the fixed mold 60 from entering from the outer side to the inner side of the resin leakage preventing ingate 49. This makes it possible to prevent the molten resin in the fixed mold 60 from entering the hole portion 61 of the movable mold 62 and adhering to the external connecting portion 34 of the terminal 19.

Further, the outer end portion of the body portion 35 of the terminal 19 is held by the terminal holding portion 30 of the one division insulator 27 via the mounted portion 33, and the inner end portion of the body portion 35 is supported by the protruding portion 31 of the one division insulator 27 via the supporting piece 44 of the cap 43. Thus, in resin molding, even if the pressure of the molten rein injected into the fixed mold 60 generates force F acting on the body portion 35 of the terminal 19 in the axial direction A, it is possible to suppress the deformation of the body portion 35.

If force excessively acts to deform the body portion 35 of the terminal 19, the protective member 42 can reliably insulate the coils 17 wound around the stator core 16 from the body portion 35 of the terminal 19.

In the stator 11 with the resin portion 20 formed therein by the above-described resin molding step, as shown in FIGS. 4, 6, and 8, the body portion 35 of the terminal 19 is extended along the diameter direction B of the stator core 16, and the connecting pieces 38 and the folded pieces 39 are formed along the diameter direction B to sandwich the terminal end portions 17a of the coils 17 from the axial direction A. Accordingly, a dimension C from the leading end surface of the terminal holding portion 30 of the one division insulator 27 to the coil connecting portions 36 is reduced in the axial direction A. Thus, a dimension D from one end surface to another end surface of the enclosure 21 of the stator 11 can be reduced in the axial direction A without a reduction in a thickness E of the stator core 16, and the electric motor 10 can be reduced in size in the axial direction A without a reduction in the output of the electric motor 10.

As shown in FIG. 2, the rotation axis 13 of the electric motor 10 is rotated, and the rotation force of the rotation axis 13 is transmitted to the hub shell 6 through the speed reducer 7 to rotate the hub shell 6, so that the auxiliary power is applied to the front wheel 2.

In the first embodiment, the enclosure 21 of the stator 11 is formed of resin but may be formed of metal as in the following second and third embodiments.

### (Second Embodiment)

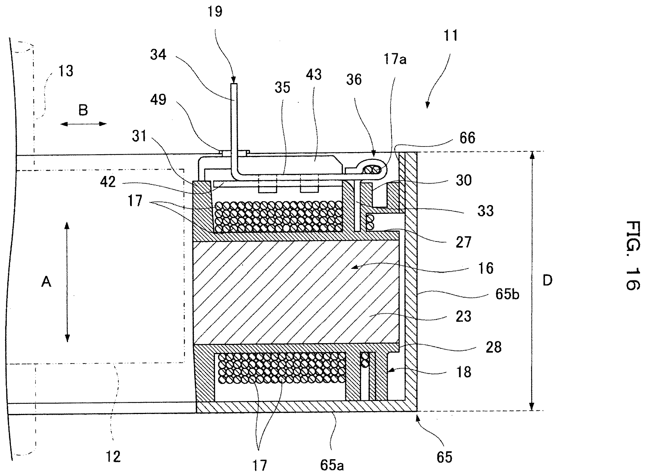

As shown in FIG. 16, an enclosure 65 formed of metal such as iron or aluminum has a circular bottom plate 65a and a cylindrical member 65b provided on the peripheral edge of the bottom plate 65a. The enclosure 65 is made by press working or welding and has one opening end in an axial direction A. Further, insulating film tape 66 (an insulating member) is provided between coil connecting portions 36 of a terminal 19 and the inner circumferential surface of the cylindrical member 65b of the enclosure 65.

Thus, as in the first embodiment, a dimension D from one end to another end of the enclosure 65 of a stator 11 can be reduced in the axial direction A, and an electric motor 10 can be reduced in size in the axial direction A without a reduction in the output of the electric motor 10.

### (Third Embodiment)

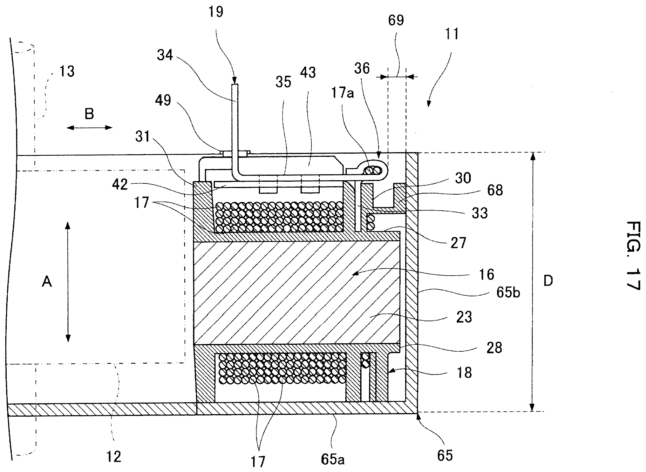

As shown in FIG. 17, an enclosure 65 formed of metal such as iron or aluminum has a bottom plate 65a and a cylindrical member 65b. One division insulator 27 has a protruding piece 68 on the outer end portion thereof in a diameter direction B. The outer end portion of the protruding piece 68 contacts the inner circumferential surface of the cylindrical member 65b of the enclosure 65, so that a gap 69 is formed between coil connecting portions 36 of a terminal 19 and the inner circumferential surface of the cylindrical member 65b. Thus, insulation is reliably provided between the coil connecting portions 36 and the cylindrical member 65b.

This makes it possible, as in the first embodiment, to reduce a dimension D from one end to another end of the enclosure 65 of a stator 11 in an axial direction A and reduce the size of an electric motor 10 in the axial direction A without a reduction in the output of the electric motor 10.

## Claims

1. A stator (11) of an electric motor (10) comprising:
a stator core (16);
coils (17) wound around the stator core (16);
an insulator (18) for providing insulation between the stator core (16) and the coils (17); and a terminal (19), and containing, in an enclosure (65) of the stator (11), the stator core (16) with the insulator (18) attached thereto and the coils (17) wound therearound, wherein the insulator (18) comprises a terminal holding portion (30) ;
the terminal (19) comprises a mounted portion (33) mounted on the terminal holding portion (30) of the insulator (18), an external connecting portion (34) protruding to an outside from an end portion of the enclosure (65) in an axial direction orthogonal to a diameter direction of the stator core (16),
**characterized in that**
the terminal (19) further comprises a body portion (35) formed between the mounted portion (33) and the external connecting portion (34) and extended in the diameter direction of the stator core (16), and a coil connecting portion (36) contained in the enclosure (65) and connected to the coils (17); and
the coil connecting portion (36) comprises a connecting piece provided on the body portion (35) and extended along the diameter direction of the stator core (16), and a folded piece (39) folded back from an end portion of the connecting piece in the diameter direction to sandwich the coils (17) from the axial direction.

2. The stator (11) of an electric motor (10) according to claim 1, being **characterized in that**:
the stator core (16), the coils (17), and the insulator (18) are integrally molded with a resin portion (20), and the enclosure (65) is integrally formed with the resin portion (20);
the external connecting portion (34) of the terminal (19) protrudes to the outside from an end surface of the resin portion (20) in the axial direction; and
the mounted portion (33), the body portion (35), and the coil (17) connecting portion of the terminal (19) are embedded in the resin portion (20).

3. The stator (11) of an electric motor (10) according to claim 1, being **characterized in that** the body portion (35) of the terminal (19) faces the coils (17) with a gap therebetween in the axial direction, and a protective member (42) is provided on the terminal (19) to provide insulation between the body portion (35) of the terminal (19) and the coils (17) .

4. The stator (11) of an electric motor (10) according to claim 1, being **characterized in that**: the mounted portion (33) of the terminal (19) is provided on one end portion of the body portion (35) of the terminal (19) in the diameter direction of the stator core (16);
the one end portion of the body portion (35) of the terminal (19) is held by the terminal holding portion (30) of the insulator (18) via the mounted portion (33) of the terminal (19); and
another end portion of the body portion (35) of the terminal (19) is supported by the insulator (18) via a cap provided on the terminal (19).

5. The stator (11) of an electric motor (10) according to claim 1, being **characterized in that** the coil connecting portion (36) and the coils (17) are pressure-welded, and
spaces are formed on outer sides of the connecting piece and the folded piece (39) in the axial direction, the spaces allowing electrodes for pressure welding to be placed therein.

6. An electric motor (10) comprising:
the stator (11) according to any one of claims 1 to 5; a rotor; and
a rotation axis rotated by the rotor.

7. An electric bicycle comprising the electric motor (10) according to claim 6, the electric bicycle being **characterized in that** rotary driving force of the electric motor is used as auxiliary power.

## Patentansprüche

1. Stator (11) eines Elektromotors (10), umfassend:
einen Statorkern (16);
Spulen (17), die um den Statorkern (16) gewickelt sind;
einen Isolator (18) zum Bereitstellen einer Isolierung zwischen dem Statorkern (16) und den Spulen (17); und
einen Anschluss (19),
und der in einem Gehäuse (65) des Stators (11) den Statorkern (16) mit dem daran befestigten Isolator (18) und den um diesen gewickelten Spulen (17) enthält,
wobei der Isolator (18) einen Anschlusshalteabschnitt (30) umfasst;
wobei der Anschluss (19) einen montierten Abschnitt (33) umfasst, der an dem Anschlusshalteabschnitt (30) des Isolators (18) montiert ist,
einen externen Verbindungsabschnitt (34), der von einem Endabschnitt des Gehäuses (65) nach außen in einer axialen Richtung orthogonal zu einer Durchmesserrichtung des Statorkerns (16) ragt,
**dadurch gekennzeichnet, dass**
der Anschluss (19) ferner einen Körperabschnitt (35) umfasst, der zwischen dem montierten Abschnitt (33) und dem externen Verbindungsabschnitt (34) gebildet und in Durchmesserrichtung des Statorkerns (16) verlängert ist, und einen Spulenverbindungsabschnitt (36), der in dem Gehäuse (65) enthalten und mit den Spulen (17) verbunden ist; und
der Spulenverbindungsabschnitt (36) ein Verbindungsstück umfasst, das auf dem Körperabschnitt (35) vorgesehen ist und sich entlang der Durchmesserrichtung des Statorkerns (16) erstreckt, und ein gefaltetes Stück (39), das von einem Endabschnitt des Verbindungsstücks in Durchmesserrichtung zurückgeklappt ist, um die Spulen (17) aus der Axialrichtung zwischen sich aufzunehmen.

2. Stator (11) eines Elektromotors (10) nach Anspruch 1, **dadurch gekennzeichnet, dass**:
der Statorkern (16), die Spulen (17) und der Isolator (18) integral mit einem Harzabschnitt (20) gegossen sind und das Gehäuse (65) integral mit dem Harzabschnitt (20) ausgebildet ist;
der externe Verbindungsabschnitt (34) von dem Anschluss (19) nach außen von einer Endfläche des Harzabschnitts (20) in axialer Richtung vorsteht; und
der montierte Abschnitt (33), der Körperabschnitt (35) und der Spulenverbindungsabschnitt (17) des Anschlusses (19) in dem Harzabschnitt (20) eingebettet sind.

3. Stator (11) eines Elektromotors (10) nach Anspruch 1, **dadurch gekennzeichnet, dass** der Körperabschnitt (35) des Anschlusses (19) den Spulen (17) mit einem Spalt dazwischen in axialer Richtung zugewandt ist, und ein Schutzelement (42) an dem Anschluss (19) vorgesehen ist, um eine Isolierung zwischen dem Körperabschnitt (35) des Anschlusses (19) und den Spulen (17) zu schaffen.

4. Stator (11) eines Elektromotors (10) nach Anspruch 1, **dadurch gekennzeichnet, dass**: der montierte Abschnitt (33) des Anschlusses (19) an einem Endabschnitt des Körperabschnitts (35) des Anschlusses (19) in Durchmesserrichtung des Statorkerns (16) vorgesehen ist;
der eine Endabschnitt des Körperabschnitts (35) des Anschlusses (19) durch den Anschlusshalteabschnitt (30) des Isolators (18) über den montierten Abschnitt (33) des Anschlusses (19) gehalten wird; und
ein weiterer Endabschnitt des Körperabschnitts (35) des Anschlusses (19) durch den Isolator (18) über eine an dem Anschluss (19) vorgesehene Kappe getragen wird.

5. Stator (11) eines Elektromotors (10) nach Anspruch 1, **dadurch gekennzeichnet, dass** der Spulenanschlussabschnitt (36) und die Spulen (17) druckgeschweißt sind, und
an den Außenseiten des Verbindungsstücks und des gefalteten Stück (39) in axialer Richtung Zwischenräume gebildet sind, in denen Elektroden für das Pressschweißen platziert werden können.

6. Elektromotor (10), umfassend:
den Stator (11) nach einem der Ansprüche 1 bis 5; einen Rotor; und
eine Drehachse, die durch den Rotor gedreht wird.

7. Elektrisches Fahrrad, umfassend den Elektromotor (10) nach Anspruch 6, wobei das elektrische Fahrrad **dadurch gekennzeichnet ist, dass** die Drehantriebskraft des Elektromotors als Hilfsenergie verwendet wird.

## Revendications

1. Stator (11) d'un moteur électrique (10) comprenant:
un noyau de stator (16);
des bobines (17) enroulées autour du noyau de stator (16);
un isolant (18) pour fournir une isolation entre le noyau de stator (16) et les bobines (17); et
une borne (19) et contenant, dans une enceinte (65) du stator (11), le noyau de stator (16) avec l'isolant (18) fixé à celui-ci et les bobines (17) enroulées autour de celui-ci, dans lequel l'isolateur (18) comprend une partie de maintien de borne (30);
la borne (19) comprend une partie montée (33) montée sur la partie de maintien de borne (30) de l'isolant (18), une partie de connexion externe (34) faisant saillie vers l'extérieur depuis une partie d'extrémité de l'enceinte (65) dans une direction axiale orthogonale à une direction de diamètre du noyau de stator (16),
**caractérisé en ce que**
la borne (19) comprend en outre une partie corps (35) formée entre la partie montée (33) et la partie de connexion externe (34) et s'étendant dans la direction du diamètre du noyau de stator (16) et une partie de connexion de bobine (36) contenue dans l'enceinte (65) et reliée aux bobines (17); et
la partie de connexion de bobine (36) comprend une pièce de connexion prévue sur la partie corps (35) et s'étendant le long de la direction du diamètre du noyau de stator (16), et une pièce pliée (39) repliée retour d'une partie d'extrémité de la partie de connexion dans la direction du diamètre pour prendre en sandwich les bobines (17) à partir de la direction axiale.

2. Stator (11) de moteur électrique (10) selon la revendication 1, **caractérisé en ce que**:
le noyau de stator (16), les bobines (17) et l'isolant (18) sont intégralement moulés avec une partie résine (20), et l'enceinte (65) est formée d'un seul tenant avec la partie résine (20);
la partie de connexion externe (34) de la borne (19) fait saillie vers l'extérieur depuis une surface d'extrémité de la partie résine (20) dans la direction axiale; et
la partie montée (33), la partie corps (35) et la partie connexion de la bobine (17) de la borne (19) sont noyées dans la partie résine (20).

3. Stator (11) de moteur électrique (10) selon la revendication 1, **caractérisé en ce que** la partie corps (35) de la borne (19) fait face aux bobines (17), séparées par un espace, dans le sens axial, et un élément de protection (42) est prévu sur la borne (19) pour assurer une isolation entre la partie corps (35) de la borne (19) et les bobines (17).

4. Stator (11) de moteur électrique (10) selon la revendication 1, **caractérisé en ce que**:
la partie montée (33) de la borne (19) est prévue sur une partie d'extrémité de la partie corps (35) de la borne (19) dans la direction du diamètre du noyau de stator (16);
la partie d'extrémité de la partie corps (35) de la borne (19) est maintenue par la partie de maintien de borne (30) de l'isolant (18) par le biais de la partie montée (33) de la borne (19);
et une autre partie d'extrémité de la partie corps (35) de la borne (19) est supportée par l'isolant (18) par le biais d'un capuchon prévu sur la borne (19).

5. Stator (11) de moteur électrique (10) selon la revendication 1, **caractérisé en ce que** la partie de connexion de bobine (36) et les bobines (17) sont soudées sous pression, et
des espaces sont formés sur les côtés extérieurs de la pièce de connexion et de la pièce pliée (39) dans la direction axiale, les espaces permettant d'y placer des électrodes pour le soudage sous pression.

6. Moteur électrique (10) comprenant:
le stator (11) selon l'une quelconque des revendications 1 à 5; un rotor; et un axe de rotation mis en rotation par le rotor.

7. Bicyclette électrique comprenant le moteur électrique (10) selon la revendication 6, la bicyclette électrique étant **caractérisée en ce que** la force d'entraînement en rotation du moteur électrique est utilisée comme puissance auxiliaire.
